# EUROPEAN PATENT SPECIFICATION

(11) **EP 1 046 205 B1**
(45) Date of publication and mention of the grant of the patent: **12.05.2004**
(21) Application number: 99907362.0
(22) Date of filing: 11.01.1999
(51) Int. Cl.: H02G 3/12, H02B 1/46

(54) **IMPROVED FLUSH-MOUNTING WALL ENCLOSURE FOR ELECTRICAL COMPONENTS**
VERBESSERTE UNTERPUTZDOSE FÜR ELEKTRISCHE KOMPONENTEN
AMELIORATION APPORTEE A UN BOITIER MURAL ENCASTRE POUR COMPOSANTS ELECTRIQUES

(30) Priority: 12.01.1998 IT MI980027
(43) Date of publication of application: 25.10.2000
(73) Proprietor: GEWISS S.p.A., I-24069 Cenate Sotto (Bergamo) (IT)
(72) Inventor: BOSATELLI, Domenico, I-24069 Cenate Sotto (IT)
(74) Representative: Forattini, Amelia
(86) International application number: PCT/EP1999/000104
(87) International publication number: WO 1999/035726

(56) References cited:
- WO-A-94/03951
- DE-A- 3 528 965
- DE-U- 7 048 119
- DE-U- 8 914 562
- US-A- 2 506 207

## Description

The present invention relates to an improved wall-mounting enclosure for electrical components, such as electronic devices, electric plug-ins and the like. More particularly, the invention relates to a wall-mounting enclosure for electronic devices, electric plug-ins or sockets and the like which is capable of accommodating multiple electric sockets.

It is known that electric plug-ins or sockets are accommodated in enclosures which are suitable to contain them and to be embedded in a wall.

Wall-mounting enclosures are composed of a bottom which is suitable to contain the electric sockets and is perimetrically surrounded by a rim which allows to secure the enclosure in a cavity formed in the wall in which the enclosure is to be embedded.

The sides of the enclosure have detachable parts which are suitable to free openings for the passage of the tubes which internally accommodate the electric wires for the devices which are then accommodated inside the enclosure.

During the fitting of the enclosure inside the wall, it is necessary to prevent mortar and other materials used to finish the wall in which the enclosure is embedded from penetrating the enclosure, obstructing its access and therefore hindering the subsequent insertion of the frame that supports the electric sockets to be inserted in the enclosure.

For this purpose there is usually a cover, a mortar-guard, which is adapted to cover the access opening of the wall-mounting enclosure.

The mortar-guard therefore allows to prevent the space for accommodating the electric sockets from being obstructed by material which inevitably fills the space.

Wall-mounting enclosures of this type have some drawbacks which are listed hereafter.

First of all, the cover is separate from the enclosure and therefore is not always available; installers, when they do not have it available, are sometimes forced to embed the enclosure in the wall and then fill its access opening with discarded newspaper sheets or the like in order to constitute a sort of makeshift mortar-guard.

Since the conventional type of wall-mounting enclosure does not have a built-in cover for its front opening, and since it has different kinds of profile for its outer edge, its longer sides flex during embedding, consequently entailing subsequent difficulties in fitting the socket holder frame.

Furthermore, since the dimensions of the front opening of the enclosure are standardized according to specific standards, conventional types of enclosure are inadequate from the point of view of the space offered on the four sides to accommodate the electric sockets.

DE-U-8914562 discloses a wall socket provided with a cover of the above described type.

DE-A-3528965 discloses a wall-mounting enclosure having a cover provided with protrusions on the outer surface of the cover.

The aim of the present invention is therefore to provide an improved wall-mounting enclosure for electrical components, such as electric sockets and the like, in which the mortar-guard is highly integrated in the enclosure itself.

An object of the invention is to provide a highly capacious wall-mounting enclosure.

A further object of the invention is to provide a wall-mounting enclosure with a container constituted by two parts and in which the internal space available for the electric sockets is increased on the four sides with respect to the space available in conventional types of enclosure given an equal standard access perimeter and number of parts.

A further object of the invention is to provide a wall-mounting enclosure having a greater resistance to flexing along its longer sides with respect of conventional types of enclosure.

A further object of the invention is to provide a wall-mounting enclosure which once embedded in the wall, can be easily located even when the front side is covered by masonry material, paint or plaster.

A further object of the invention is to provide an enclosure wherein the base member is in different colors, according to the type of system and/or to the value of the electric voltage used, without altering the color of the visible part of the enclosure (rim and mortar-guard) to facilitate its identification by the installer.

A further object of the invention is to provide a wall-mounting enclosure which has a high performance, is relatively easy to produce and at competitive costs and has a small number of parts.

This aim, these objects and others which will become apparent hereinafter are achieved by a wall-mounting enclosure for electrical components as claimed in the appended claims.

Further characteristics and advantages of the invention will become apparent from the description of a preferred but not exclusive embodiment of the wall-mounting enclosure according to the invention, illustrated only by way of non-limitative example in the accompanying drawings, wherein:
Fig. 1 is an exploded perspective view of the enclosure according to the present invention, with the corresponding integrated mortar-guard;
Fig. 2 is a perspective view of the particular edge of the enclosure according to the present invention;
Fig. 3 is a partial transverse sectional view of the detail of the coupling of the rim to the enclosure according to the present invention;
Fig. 4 is a partial sectional view, taken along a transverse plane, of the coupling between the rim and the base member of the enclosure according to the present invention, illustrating the metal insert meant to fix the socket supporting frame;
Fig. 5 is a general perspective view of the entire enclosure according to the present invention, shown embedded in a wall; and
Fig. 6 is a perspective view of the enclosure according to the present invention, with the mortar-guard fitted in an original position which is the opposite of the one shown in Fig. 5 (repositioning after first removal).

In all the figures, identical reference numerals designate identical parts.

With reference to the above figures, the wall-mounting enclosure according to the present invention, generally designated by the reference numeral 1, includes a base member which is substantially shaped like a parallelepiped and constitutes the base of the enclosure, generally designated by the reference numeral 2, which is provided, on its sides, with detachable parts 3 which allow, once removed, the passage of tubes which accommodate the electric wires for connection to the electric sockets which are subsequently inserted in the base 2 of the enclosure.

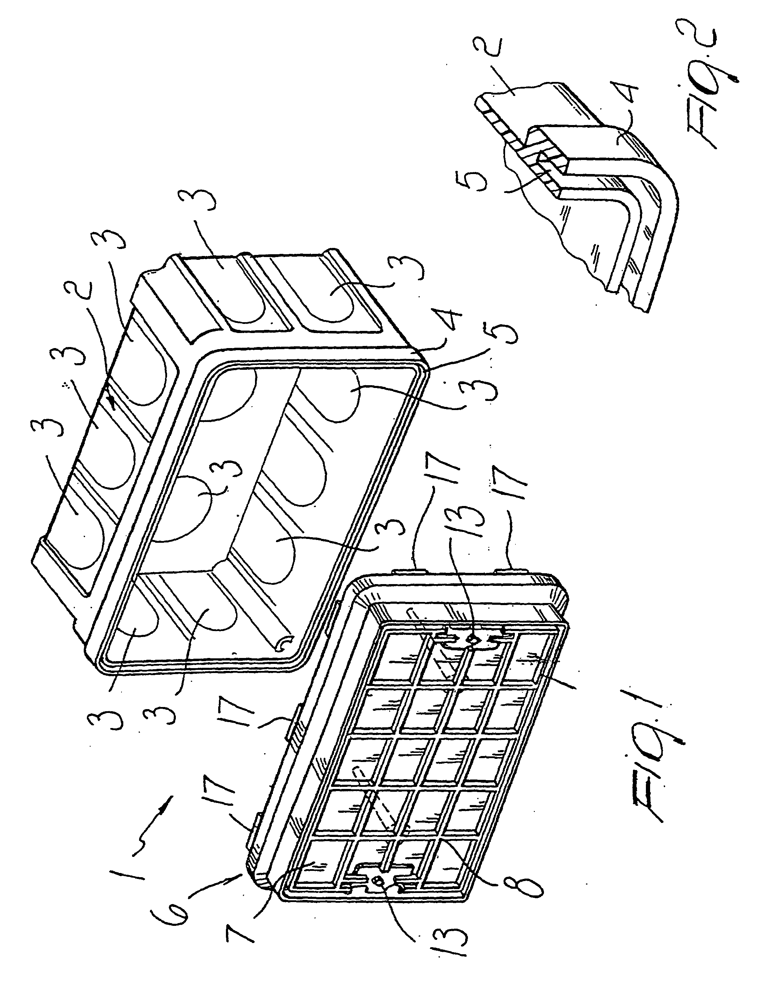

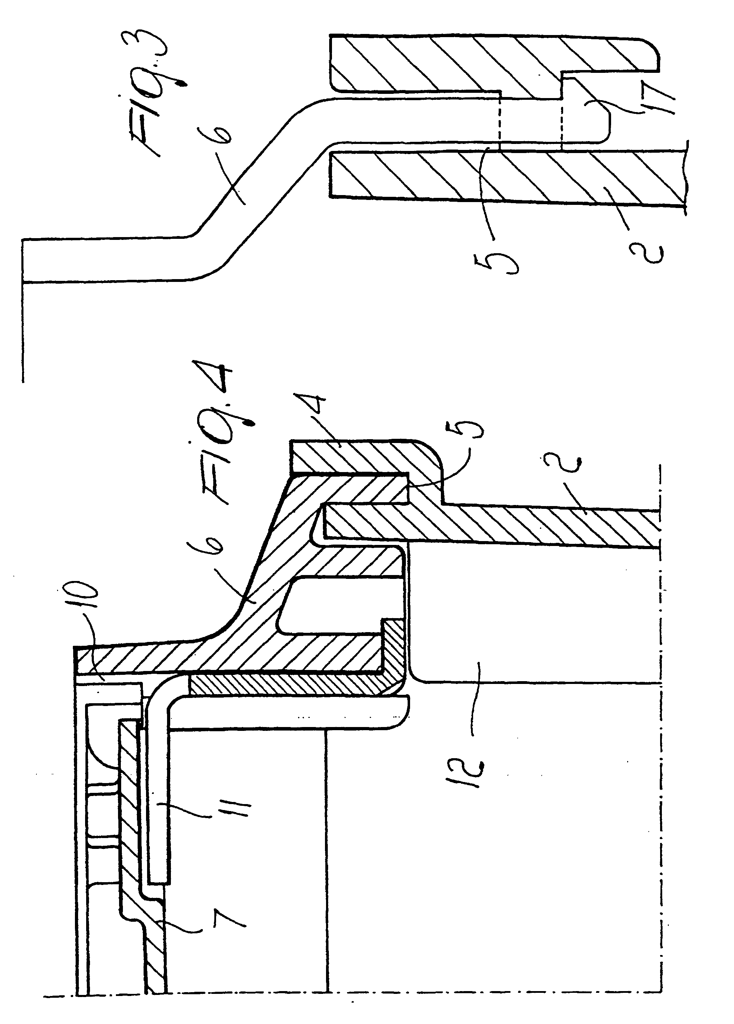

The base member part 2, substantially shaped like a parallelepiped, of the enclosure according to the invention is provided with an edge 4 which protrudes with respect to the sides of the base 2 and is shaped, as shown in Fig. 2, so as to have an h-shaped profile, with a groove 5 formed between two parallel profiles which constitute the edge 4.

The groove 5 allows to accommodate a rim, designated by the reference numeral 6, which can engage, by virtue of teeth 17, in corresponding slots which are formed within the groove 5, not shown in the drawings. The rim 6 is closed by a cover or mortar-guard 7, which is integrated with the rim 6 and is initially connected thereto but can be subsequently detached from it, as will become apparent hereinafter.

The rim 6 has pins which are arranged at its four corners to lock the base part 2, which is correspondingly provided with four seats for the pins.

The mortar-guard 7 is provided with stiffening ridges 8 and has, on its lower face which is directed toward the internal space of the enclosure 2, protrusions 9 whose function is illustrated in detail hereinafter.

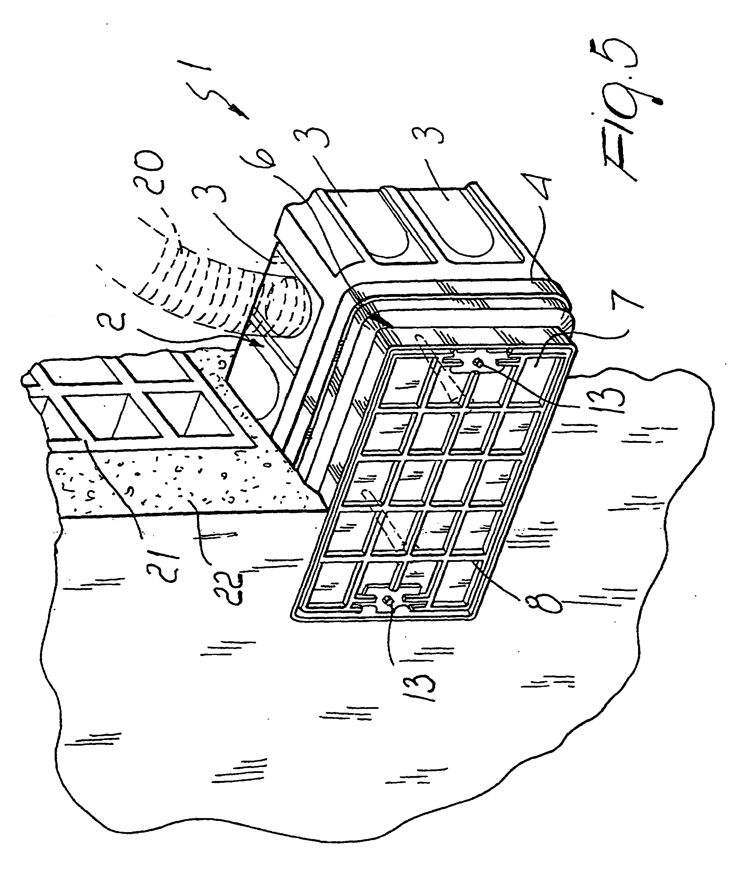

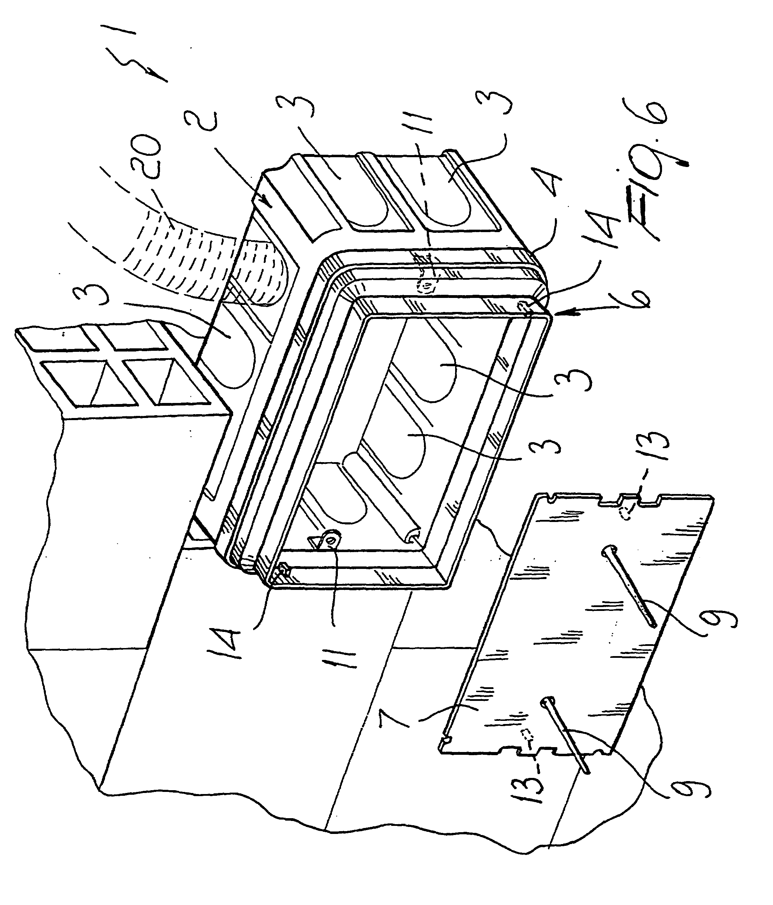

A transverse sectional view of the rim 6, as shown in Fig. 4, clearly points out that a suitable guide 10 is formed at a median point of the shorter side of the rim and is adapted to retain metal inserts 11 which are adapted to fasten a socket supporting frame, at the same time limiting the movement of the inserts toward the outside of the enclosure. The metal insert 11 is prevented from falling into the base part 2 by engaging a central ridge 12.

There is of course at least one pair of inserts 11, one for each short side of the enclosure, in order to lock in position, by means of screws, the socket supporting frame, which is not shown in the figures.

The h-shaped groove 5 formed in the edge of the base member 2 allows to accommodate the rim 6 with the corresponding mortar-guard 7 as well as to stiffen the structure of the enclosure and in particular its long edges, which accordingly flex to a lesser extent once the enclosure 1 has been embedded in a wall.

The mortar-guard 7 has two pawls 13, 13 which protrude from the surface that is directed toward the outside of the enclosure and are adapted to engage threaded seats provided on the metal inserts 11 once the mortar-guard 7 has been detached from the rim 6 and turned through 180° to be then arranged upside down inside the rim 6 to again act as a protection for the enclosure access compartment but at the same time allow, by virtue of the protrusions 9, to locate the enclosure embedded in the wall even when it is substantially covered by masonry material or plaster.

In order to allow the overturning of the mortar-guard 7 and then its accommodation within the rim 6, along the internal edge of the rim, protrusions or pins 14 allow the mortar-guard to rest within the rim 6 and prevent it from falling into the internal space of the base member 2.

Figs. 5 and 6, illustrate two possibilities for positioning the mortar-guard 7 to cover the free space of the wall-mounting enclosure 1. In Fig. 5, the mortar-guard is shown inserted within the corresponding rim 6 and in turn the rim is accommodated within the groove 5 of the base member 2. A flexible tube 20 is shown to protrude from the base part 2 and the figures also show a cutout view of a wall composed of bricks 21 and mortar 22.

The second possibility for positioning the mortar-guard 7 with respect to the rim 6 and to the base member 2 is shown in Fig. 6, in which the mortar-guard is positioned to accommodate it within the rim in an inverted position with respect to the one assumed in Fig. 5; in this manner, the protrusion 9 protrudes outside the wall and allows to rapidly locate the enclosure even when it is covered by masonry material.

The rim 6 is advantageously provided with a transverse cross-section which is shaped like a bottle-neck so as to give strength to the part and prevent the enclosure from coming out of the wall once it has been embedded.

The coupling between the rim 6 and the base member 2 occurs, as shown, by virtue of engagement teeth 17 which are arranged on the rim 6 and engage the groove 5 in suitable seats formed therein. As an alternative, the perimeter of the rim 6 can be glued in the groove 5 by ultrasound technology or other available methods.

The mortar-guard 7 obtained monolithically with the rim 6 prevents, during embedding, the ordinary flexing of the long walls which causes subsequent difficulties in mounting the socket supporting frame.

The particular configuration of the enclosure according to the invention, formed by two parts, that is to say, the base member 2 and the rim 6 with the corresponding mortar-guard 7, allows to increase the internal space of the enclosure with respect to the standard perimeter both on the short sides and on the long sides thereof.

Accordingly, the enclosure according to the invention allows to have more space inside the enclosure despite having an access perimeter whose dimensions are absolutely standard.

Furthermore, the advantage of having an enclosure whose dimensions are larger on its four sides with respect to the access perimeter covered by the rim allows to arrange the electric sockets inside the enclosure more easily.

In practice it has been found that the wall-mounting enclosure according to the invention fully achieves the intended aim, since it allows, by being formed by two parts, that is to say, the base member and the rim with mortar-guard, to be embedded in the wall whilst still having the mortar-guard available for covering it.

The mortar-guard built into the rim also allows to stiffen the rim and therefore the entire structure of the enclosure once it has been embedded into the wall.

Finally, the parts that protrude from the surface of the mortar-guard, when it is fitted facing outward, allow to very quickly locate the enclosure even if it is fully covered by masonry material or plaster. This allows faster work of the brickworkers, who no longer need to be careful not to affect the area occupied by the enclosure with their material.

The enclosure thus conceived is susceptible of numerous modifications and variations within the scope of the invention, which is defined by the appended claims.

In practice, the materials used, so long as they are compatible with the specific use, as well as the dimensions, may be any according to the requirements and the state of the art.

## Claims

1. A wall-mounting enclosure for electric devices, electric sockets and the like, comprising a base member (2) associated with a rim (6) which internally accommodates, in an integrated but detachable manner, a cover (7) which is adapted to prevent the unwanted filling of said base member (2) with masonry materials when said enclosure (1) is embedded in a wall (21,22), **characterized in that** the outside dimensions of said base member (2) are greater than those of the access opening formed by said rim (6) on all the sides of the perimeter; and **in that** said cover (7) is provided with stiffening ridges (8) on at least one of its surfaces and with at least one protrusion (9) which projects from the inner surface; said cover being adapted to be detached from said rim (6) and remounted on said rim (6) in a reversed condition in order that said at least one protrusion (9) projects from the outer surface of said cover.

2. The wall-mounting enclosure according to claim 1, **characterized in that** said rim (6) has a bottleneck-like profile in transverse cross-section.

3. The wall-mounting enclosure according to claim 1, **characterized in that** said rim (6) has two guides, each guide being located at a median point of each of the shorter side of said rim (6), each of said guide being for the insertion of a metal insert (11) for connection to a socket supporting frame, a central ridge being provided for locking said metal insert (11).

4. The wall-mounting enclosure according to claim 3, **characterized in that** one of the surfaces of said cover (7) which lies opposite the surface on which at least one protrusion (9) is provided, has a pair of pawls (13) adapted to engage threads of said metal inserts when said cover is removed from said rim and reversed on said rim.

5. The wall-mounting enclosure according to one or more of the preceding claims, **characterized in that** the upper edge of said base member (2) has a groove (5) which is adapted to accommodate said rim (6), said rim (6) being provided with engagement teeth (17) adapted to engage said groove (5).

6. The wall-mounting enclosure according to one or more of the preceding claims, **characterized in that** said rim (6) has at least one pair of protrusions (14), at its internal perimeter, said at least one pair of protrusions (14) constituting resting points for said cover when it is removed from the rim (6) and reversed therein.

## Patentansprüche

1. Unterputzdose für elektrische Vorrichtungen, Anschlüsse und dergleichen, welche ein mit einem Rand (6) verbundenes Basisbauteil (2) aufweist, das in einer aufnehmenden jedoch lösbaren Weise eine Abdeckung (7) intern aufnimmt, welche dazu vorgesehen ist, ungewünschtes Füllen des Basisbauteils (2) beim Einbauen der Dose (1) in eine Wand (21, 22) mit Materialien des Mauerwerks zu verhindern, **dadurch gekennzeichnet, daß** die äußeren Abmessungen des Basisbauteils (2) größer sind als die der durch den Rand (6) gebildeten Zugangsöffnungen an allen Seiten des Umfangs und die Abdeckung (7) mit versteifenden Kanten (8) an wenigstens einer seiner Oberflächen und mit wenigstens einem Vorsprung (9) versehen ist, welcher von der inneren Oberfläche hervorsteht, wobei die Abdeckung vorgesehen ist von dem Rand (6) abgelöst und auf dem Rand (6) in einer umgekehrten Weise wieder befestigt zu werden, damit der wenigstens eine Vorsprung (9) von der äußeren Oberfläche der Abdeckung hervorsteht.

2. Unterputzdose nach Anspruch 1, **dadurch gekennzeichnet, daß** der Rand (6) in einem quer verlaufenden Querschnitt ein einem Flaschenhals ähnliches Profil aufweist.

3. Unterputzdose nach Anspruch 1, **dadurch gekennzeichnet, daß** der Rand (6) zwei Führungen aufweist, von denen jede an dem Mittelpunkt jeder der kürzeren Seiten des Randes (6) plaziert ist, wobei die Führungen für ein Einsetzen eines Metalleinsatzes (11) zum Verbinden mit einem die Schaltung tragenden Rahmen vorgesehen ist und eine zentrale Kante dazu vorgesehen ist, den Metalleinsatz, (11) zu verriegeln.

4. Unterputzdose nach Anspruch 3, **dadurch gekennzeichnet, daß** eine der mit wenigstens einem Vorsprung versehenen Oberfläche gegenüberliegende Oberflächen der Abdeckung (7) ein Klinkenpaar (13) aufweist, welches dazu vorgesehen ist, Drähte der Metalleinsätze aufzunehmen, wenn die Abdeckung von dem Rand entfernt wird und auf dem Rand umgekehrt wird.

5. Unterputzdose nach einem oder mehreren der vorhergehenden Ansprüche, **dadurch gekennzeichnet, daß** die obere Kante des Basisbauteils (2) eine Nut (5) aufweist, welche dazu vorgesehen ist mit dem Rand (6) zusammenzuwirken, wobei der Rand (6) mit Eingriffszähnen (17) versehen ist, die dazu vorgesehen sind, in die Nut (5) einzugreifen.

6. Unterputzdose nach einem oder mehreren der vorhergehenden Ansprüche, **dadurch gekennzeichnet, daß** der Rand (6) an seinem inneren Umfang wenigstens ein Paar von Vorsprüngen (14) aufweist, wobei das wenigstens eine Paar von Vorsprüngen (14) Haltepunkte für die Abdeckung ausbildet, wenn diese von dem Rand (6) entfernt wird und darauf umgekehrt wird.

## Revendications

1. Boîtier mural pour dispositifs électriques, prises électriques et analogues, comprenant un élément de base (2) associé à une monture (6) qui reçoit intérieurement, d'une façon intégrée mais détachable, un couvercle (7) qui est adapté pour éviter un remplissage importun dudit élément de base (2) par des matériaux de maçonnerie lorsque ledit boîtier (1) est encastré dans un mur (21, 22), **caractérisé en ce que** les dimensions extérieures dudit élément de base (2) sont plus grandes que celles de l'ouverture d'accès formée par ladite monture (6) sur tous les côtés du périmètre ; et **en ce que** ledit couvercle (7) est muni de nervures raidisseuses (8) sur au moins une de ses surfaces et d'au moins une protubérance (9) qui est en saillie par rapport à la surface intérieure ; ledit couvercle étant adapté pour être détaché de ladite monture (6) et pour être remonté sur ladite monture (6) dans un état retourné de manière que ladite au moins une protubérance (9) soit en saillie par rapport à la surface extérieure dudit couvercle.

2. Boîtier mural selon la revendication 1, **caractérisé en ce que** ladite monture (6) possède un profil en goulot de bouteille en section transversale.

3. Boîtier mural selon la revendication 1, **caractérisé en ce que** ladite monture (6) possède deux guides, chaque guide étant placé en un point médian de chacun des petits cotés de ladite monture (6), chacun desdits guides étant prévus pour l'insertion d'une pièce rapportée métallique (11) destinée à s'assembler à un cadre de support de prise, une nervure centrale étant prévue pour verrouiller ladite pièce rapportée métallique (11).

4. Boîtier mural selon la revendication 3, **caractérisé en ce qu'**une des surfaces dudit couvercle (7) qui se trouve à l'opposé de la surface sur laquelle au moins une protubérance (9) est prévue, possède une paire de doigts (13) adaptés pour coopérer avec des filets desdites pièces rapportées métalliques lorsque ledit couvercle est séparé de ladite monture et retourné sur ladite monture.

5. Boîtier mural selon une ou plusieurs des revendications précédentes, **caractérisé en ce que** le bord supérieur dudit élément de base (2) présente une gorge (5) qui est adaptée pour recevoir ladite monture (6), ladite monture (6) étant munie de dents d'accouplement (17) adaptées pour être en prise avec ladite gorge (5).

6. Boîtier mural selon une ou plusieurs des revendications précédentes, **caractérisé en ce que** ladite monture (6) possède au moins une paire de protubérances (14), au niveau de son périmètre intérieur, ladite au moins une paire de protubérances (14) constituant des points d'appui pour ledit couvercle lorsqu'il est séparé de ladite monture (6) et retourné dans cette dernière.
